# FASCICULE DE BREVET EUROPEEN

(11) **EP 3 698 033 B1**
(45) Date de publication et mention de la délivrance du brevet: **29.03.2023**
(21) Numéro de dépôt: 18800691.0
(22) Date de dépôt: 20.09.2018
(51) Int. Cl.: F02D 41/14, F02D 41/22, F02D 35/02, F02D 41/00

(54) **PROCÉDÉ DE DIAGNOSTIC D'UN ENDOMMAGEMENT D'UN MOTEUR PAR DES PRÉ-ALLUMAGES**
VERFAHREN ZUR DIAGNOSE VON SCHÄDEN AN EINEM MOTOR DURCH VORZÜNDUNGEN
METHOD FOR DIAGNOSING DAMAGE TO AN ENGINE FROM PRE-IGNITIONS

(30) Priorité: 20.10.2017 FR 1759898
(43) Date de publication de la demande: 26.08.2020
(73) Titulaire: PSA Automobiles SA, 78300 Poissy (FR)
(72) Inventeur: DELMACHE, Jonathan, 75002 Paris 02 (FR); MARTINEZ, Jose Luis, 92250 La Garenne-Colombes (FR); BRENOT, Sebastien, 25310 Herimoncourt (FR); KRETZAS, Efstratios, 78160 Marly Le Roi (FR); POMMEREAU, Julien, 78300 Poissy (FR); SOUCHON, Vincent, 92600 Asnieres sur Seine (FR); GOUZONNAT, Fabien, 91400 Saclay (FR); TELLIER, Arnaud, 91170 Viry Chatillon (FR)
(86) Numéro de dépôt international: PCT/FR2018/052293
(87) Numéro de publication internationale: WO 2019/077216

(56) Documents cités:
- FR-A1- 2 910 062
- US-A1- 2011 139 120
- US-A1- 2011 202 260

## Description

L'invention porte sur un procédé de diagnostic d'un endommagement d'un moteur thermique à allumage commandé dû à une succession d'apparitions de phénomène de pré-allumage sporadique à faible régime du moteur engendrant une combustion prématurée et non désirée d'une partie du mélange de carburant dans le moteur, ceci indépendamment de l'étincelle de la bougie d'allumage dans chaque cylindre. L'invention porte aussi sur un procédé de protection d'un tel moteur par mise en oeuvre d'une action spécifique de protection du moteur.

Un tel phénomène de pré-allumage est aussi désigné sous le terme anglais de « rumble ». Le moteur thermique à allumage commandé peut être un moteur à carburant essence ou tout autre carburant sujet à un auto-allumage non maîtrisé du mélange frais.

Le phénomène de pré-allumage est un phénomène de combustion anormale sporadique, c'est-à-dire une combustion non maîtrisée par un contrôle moteur en charge du fonctionnement du moteur thermique et notamment de sa combustion. Il se caractérise par un pré-allumage du mélange frais avec auto-allumage du mélange frais, avec éventuellement des gaz recirculés, avant l'étincelle de la bougie. Le pré-allumage du mélange engendre une combustion avec une intensité de pression cylindre maximale très élevée et généralement largement au-dessus des combustions normales les plus intenses.

Le phénomène de pré-allumage est principalement présent sur les moteurs à allumage commandé suralimentés dont les conditions thermodynamiques dans la chambre sont importantes

Les causes du phénomène de pré-allumage sont encore méconnues actuellement. Cependant il est admis dans la communauté scientifique que le phénomène apparaît aux faibles régimes, aux fortes charges, aux fortes températures et avec des carburants de faible qualité, non forcément liée à l'indice d'octane (RON) contrairement au phénomène de cliquetis ainsi que des huiles de lubrification de faible qualité ou vieillies, sur des moteurs à fort rapport volumétrique de compression.

Le phénomène de pré-allumage est un phénomène sporadique et très rare, avec quelques occurrences tous les 1000 km. Il peut se former en cas isolé ou par rafale. Contrairement au cliquetis qui est un auto-allumage des gaz en fin de combustion, pendant une combustion normale initiée par la bougie, dans le cas du phénomène de pré-allumage, l'ensemble du mélange est initié par un auto-allumage avant l'étincelle de la bougie, d'où sa caractérisation de pré-allumage.

De plus, contrairement au cliquetis, un retard sur l'avance à l'allumage n'a aucun impact voire un impact négatif sur le phénomène de pré-allumage quand c'est le levier d'ordre un pour éviter les combustions cliquetantes.

Cependant, l'initiation de la combustion ayant lieu de façon très anticipée, un deuxième auto-allumage peut se former au milieu de la combustion dans les gaz en fin de combustion. Ce deuxième auto-allumage est du cliquetis et génère des oscillations de pression dont la fréquence est comprise en 5 kHz et 25 kHz.

Le phénomène de pré-allumage peut ainsi former par la suite le phénomène de cliquetis mais pas de façon systématique. En effet, une combustion avec un phénomène de pré-allumage très anticipée ne forme pas de phénomène de cliquetis, toute la charge ayant brûlée avant l'apparition du cliquetis.

Il existe actuellement deux solutions de protection contre les phénomènes de pré-allumage. La première solution est un traitement curatif dit « rapide » qui a pour objectif de faire disparaître le phénomène de pré-allumage au moment où il apparaît pour limiter les occurrences successives appelées rafales. Une solution est par exemple, de réaliser une coupure d'injection pendant plusieurs cycles moteurs sur le cylindre où le phénomène de pré-allumage est apparu pour stopper la rafale.

La deuxième solution est une limitation de charge en roulage et consiste en des limitations de remplissage qui ont pour objectif de faire disparaître le phénomène de pré-allumage ayant pour origine des causes réversibles, par exemple une mauvaise qualité du carburant, un encrassement du moteur, etc..., et/ou des causes irréversibles, notamment une casse d'une pièce moteur.

Cette deuxième solution est basée sur deux compteurs d'apparitions de phénomène de pré-allumage à dynamique lente, de plusieurs minutes voire de plusieurs roulages. Son intervention est donc lente et son effet sur la disparition du phénomène de pré-allumage n'est pas immédiat. Cette solution est calculée par une cartographie calibrée fonction du nombre de coupures d'injection qui viennent d'être réalisées pour la première solution et fonction du nombre d'apparitions de phénomène de pré-allumage qui viennent d'être réalisées pour la deuxième solution.

Ces actions curatives posent certains problèmes exposés ci-après. Pour la première solution, l'exemple de la coupure d'injection entraîne un ressenti important des passagers du véhicule automobile générant un mécontentement et/ou un sentiment de moteur défaillant. Pour la deuxième solution, son action n'est pas immédiate et la limitation est basée sur un compteur d'apparitions de phénomène de pré-allumage à dynamique lente. Son intervention est donc lente et son effet sur la disparition du phénomène de pré-allumage n'est pas immédiat.

On connait également du document US2011139120A1 ou US2011202260A1 une solution basée sur l'anticipation de l'apparition du pré-allumage ou sur le comptage des occurrences de pré-allumage. FR2910062A1 divulgue la détection d'un niveau d'endommagement et son taux d'évolution.

Enfin, ces solutions ne prennent pas en compte l'endommagement du moteur et agissent uniquement en cas de phénomène de pré-allumage immédiat ou sur des distances de l'ordre de quelques centaines de kilomètres. Elles ne permettent pas de protéger le moteur de défaillance future.

Par conséquent, le problème à la base de l'invention est, pour un moteur thermique à allumage commandé, de détecter les phénomènes de pré-allumage se produisant lors du roulage d'un véhicule automobile et de mettre en oeuvre des solutions curatives appropriées protégeant le moteur thermique sur le long terme.

Pour atteindre cet objectif, il est prévu selon l'invention un procédé de diagnostic d'un endommagement d'un moteur à allumage commandé d'un véhicule automobile, cet endommagement étant dû à des phénomènes de pré-allumage sporadiques à faible régime engendrant une combustion prématurée et non désirée d'une partie du mélange de carburant dans le moteur, procédé selon lequel il est détecté un phénomène de pré-allumage pour un cylindre des cylindres du moteur à un instant donné, il est estimé un endommagement du cylindre correspondant à un endommagement subi par au moins une pièce moteur en contact avec la chambre de combustion de ce cylindre à cet instant donné en fonction d'une cartographie du régime du moteur et du remplissage d'air du cylindre avec une attribution d'une valeur d'endommagement du cylindre à cet instant donné, la valeur d'endommagement à l'instant donné étant ajoutée aux valeurs d'endommagement précédemment attribuées depuis un début de mise en oeuvre du procédé pour le même cylindre afin de donner une valeur totale d'endommagement propre à chaque cylindre, le procédé étant caractérisé en ce que la valeur totale d'endommagement du cylindre le plus endommagé est comparée à une valeur prédéterminée et il est diagnostiqué un possible endommagement du moteur par phénomènes de pré-allumage si la valeur totale d'endommagement du cylindre le plus endommagé dépasse la valeur prédéterminée.

Le procédé de diagnostic repose sur un compteur d'endommagement spécifique à chaque cylindre, l'endommagement étant provoqué par des phénomènes de pré-allumage. C'est le compteur du cylindre le plus endommagé présentant la valeur totale maximale d'endommagement qui est pris en considération pour apprécier l'endommagement du moteur. Cette valeur totale maximale d'endommagement est comparée à une valeur de référence prédéterminée que l'on sait représentative d'un endommagement objectif dû à des phénomènes de pré-allumage. La cartographie du régime du moteur et du remplissage d'air du cylindre permet d'estimer l'endommagement subi à l'instant du phénomène de pré-allumage et d'estimer une valeur d'endommagement du cylindre à cet instant donné, ce qui est possible par retour d'expérience.

Avantageusement, il est estimé un kilométrage parcouru depuis le début de la mise en oeuvre du procédé jusqu'à l'instant donné, il est effectué une comparaison de la valeur totale d'endommagement propre à chaque cylindre avec une courbe objective d'endommagement du moteur prédéterminée en fonction du kilométrage parcouru, et, quand une valeur totale d'endommagement d'au moins un cylindre est supérieure à la valeur donnée par la courbe objective d'endommagement pour ledit kilométrage parcouru, il est conclu à un diagnostic d'endommagement sévère du moteur.

Une courbe objective d'endommagement fonction du kilométrage initiée à un endommagement nul au début du kilométrage et convergente vers un endommagement correspondant à la casse probable d'une pièce moteur au-dessus d'un kilométrage dit de durabilité est construite. Cette courbe sert de référence pour estimer si l'endommagement d'un cylindre est critique.

Avantageusement, quand une valeur d'endommagement d'au moins un cylindre est supérieure à une valeur d'endommagement maximale prédéterminée de tenue d'au moins une de ces pièces du moteur, il est conclu à un diagnostic d'endommagement très sévère du moteur avec risque de défaillance immédiate du moteur.

Cette valeur de tenue maximale différencie les endommagements critiques avec risque de défaillance immédiate du moteur des endommagements sévères au-dessus de la courbe objective ou peu sévères en dessous de la courbe objective, des traitements de protection pouvant être mis en oeuvre n'étant pas similaires dans ces différents cas.

Avantageusement il est déterminé par expérience un kilométrage de durabilité au-dessus duquel un risque de défaillance du moteur est élevé dû à l'usure du moteur et non exclusivement à un endommagement par les phénomènes de pré-allumage, la courbe objective d'endommagement ne se poursuivant pas pour un kilométrage supérieur au kilométrage de durabilité.

Ce kilométrage de durabilité représente une limite de kilométrage au-dessus duquel un risque de casse moteur est élevé dû à l'usure du moteur et non exclusivement dû à un endommagement par les phénomènes de pré-allumage. L'objectif du procédé de diagnostic selon la présente invention et d'un procédé de protection dépendant du procédé de diagnostic est de vérifier puis d'assurer l'intégrité du moteur vis-à-vis du phénomène de pré-allumage jusqu'au kilométrage de durabilité. Ainsi, la valeur d'endommagement du cylindre le plus endommagé doit être inférieur à la valeur d'endommagement maximal de tenue des pièces du moteur déterminée par essais avant le kilométrage de durabilité.

Avantageusement, il est défini une première zone pour une valeur d'endommagement du cylindre le plus endommagé en dessous de la courbe objective d'endommagement du moteur pour un kilométrage parcouru inférieur au kilométrage de durabilité, une deuxième zone pour un kilométrage parcouru supérieur au kilométrage de durabilité et une valeur d'endommagement du cylindre le plus endommagé inférieure à la valeur d'endommagement maximale de tenue de pièces moteur, une troisième zone pour une valeur d'endommagement du cylindre le plus endommagé au-dessus de la courbe objective d'endommagement du moteur et en dessous de la valeur d'endommagement maximale de tenue de pièces moteur pour un kilométrage parcouru inférieur au kilométrage de durabilité, une quatrième zone pour une valeur d'endommagement du cylindre le plus endommagé au-dessus de la valeur d'endommagement maximale de tenue de pièces moteur pour un kilométrage parcouru inférieur au kilométrage de durabilité et une cinquième zone pour une valeur d'endommagement du cylindre le plus endommagé au-dessus de la valeur d'endommagement maximale de tenue de pièces moteur pour un kilométrage parcouru supérieur au kilométrage de durabilité.

Des traitements appropriés ou non de l'endommagement dû à des phénomènes de pré-allumage pourront être mis en oeuvre en fonction des zones sélectionnées.

L'invention concerne aussi un procédé de protection d'un moteur à allumage commandé d'un véhicule automobile contre un endommagement par des phénomènes de pré-allumage, caractérisé en ce qu'il met en oeuvre un tel procédé de diagnostic et en ce que, quand la valeur d'endommagement du cylindre le plus endommagé est supérieure à la valeur donnée par la courbe objective d'endommagement pour ledit kilométrage parcouru, il est procédé à une action spécifique de protection du moteur prise au moins parmi une diminution d'un remplissage d'air du moteur ou un fonctionnement en mode dégradé du moteur.

Il est possible que dans des zones critiques comme la quatrième et la cinquième zone, les deux traitements puissent être simultanément mis en oeuvre. Dans le procédé de protection selon l'invention, une baisse de charge adaptative, de préférence par diminution du remplissage d'air du moteur pour les endommagements sévères, intervient avec une dynamique très lente avec un ordre de grandeur de plusieurs milliers de kilomètres, contrairement aux corrections de l'état de la technique qui sont trop rapides et ne sont pas protectrices sur le long terme.

Les procédés de protection contre des phénomènes de pré-allumage de l'état de la technique permettent de diminuer la propagation en rafales du phénomène de pré-allumage, ce qui permet de limiter les occurrences des phénomènes de pré-allumage. Cependant, elles ne permettent pas de diagnostiquer un risque de défaillance du moteur et de réaliser des actions pour protéger le moteur vis-à-vis d'un risque de défaillance à venir.

En effet, en cas d'utilisation du moteur par le conducteur hors des spécifications du constructeur automobile, notamment en ce qui concerne le carburant, l'huile de lubrification et l'entretien, les occurrences de phénomènes de pré-allumage ne sont pas maîtrisées et peuvent aboutir à la défaillance du moteur. Au contraire le procédé de protection selon la présente invention permet dans ces cas de vie propices aux phénomènes de pré-allumage, d'éviter les défaillances moteurs avant le kilométrage maximal de durabilité.

Le procédé de protection selon la présente invention est basé sur le principe d'endommagement progressif du moteur qui n'est pas pris en compte dans les précédents procédés de l'état de la technique. L'observation en continu de l'endommagement vis-à-vis d'une courbe objective et les actions de limitation de charge associées qui diminuent les conditions thermodynamiques en étant un facteur d'ordre 1 sur l'apparition des phénomènes de pré-allumage permettent ainsi protéger le moteur vis-à-vis des risques de défaillance moteur engendrés par les phénomènes de pré-allumage.

L'intérêt technique du procédé selon l'invention est d'assurer une protection du moteur vis-à-vis des phénomènes de pré-allumage en assurant son intégrité jusqu'au kilométrage de durabilité dans toutes les conditions d'utilisation du véhicule, même quand ces conditions ne sont pas conformes aux prescriptions du constructeur automobile.

Le procédé selon l'invention permet également d'adapter les performances au strict nécessaire de protection. Ainsi, l'utilisation du moteur à allumage commandé suralimenté dans des zones où le respect par le conducteur des préconisations du constructeur, notamment en ce qui concerne le carburant, l'huile de lubrification et l'entretien du véhicule en général n'est pas systématique, est rendu possible ce qui assure une augmentation significative des destinations potentielles des moteurs à allumage commandé suralimentés tout assurant l'intégrité du moteur.

Le procédé de protection selon la présente invention permet de protéger le moteur du phénomène de pré-allumage en ce qui concerne les casses du moteur et de limiter les performances du moteur au strict nécessaire pour assurer la protection du moteur. De plus, le procédé présente une dynamique lente pour limiter les phénomènes de pré-allumage sans avoir des évolutions fortes de remplissage pour éviter les désagréments ressentis par le conducteur.

Il est possible d'alerter le conducteur du risque de défaillance immédiate dans le cas où l'endommagement du moteur est supérieur au seuil de tenue des pièces moteur.

La solution proposée par la présente invention est principalement logicielle, simple à implémenter car immédiatement intégrable dans une unité de contrôle moteur. La solution est peu coûteuse puisque ne demandant pas de matériel supplémentaire.

L'utilisation grandissante des moteurs à allumage commandé suralimenté avec une diminution de cylindrée croissante qui est un facteur d'ordre 1 sur les phénomènes de pré-allumage, oblige une mise en oeuvre d'un tel procédé de protection pour assurer l'intégrité du moteur.

Avantageusement, au moins une mise en oeuvre d'une diminution du remplissage d'air du moteur dans la troisième zone est effectuée, aucune action de protection n'étant mise en oeuvre dans les première et deuxième zones quand la valeur totale maximale d'endommagement d'un cylindre parmi les cylindres du moteur n'était pas précédemment dans la troisième zone et, dans le cas contraire, une diminution du remplissage d'air du moteur précédemment mise en oeuvre dans la troisième zone est maintenue pendant un temps limité, un fonctionnement en mode dégradé du moteur étant mis en oeuvre dans la quatrième zone avec ou sans diminution du remplissage d'air, une diminution du remplissage d'air du moteur, un fonctionnement en mode dégradé du moteur ou aucune action étant mis en oeuvre par calibration dans la cinquième zone.

Avantageusement, la diminution de remplissage d'air du moteur est mise en oeuvre par une régulation proportionnelle, intégrale et dérivée avec en entrée une différence entre, d'une part, la valeur d'endommagement du cylindre le plus endommagé et, d'autre part, la valeur donnée par la courbe objective d'endommagement pour ledit kilométrage parcouru et en sortie une baisse du remplissage d'air par rapport à une courbe de référence dépendant du régime.

La calibration des termes proportionnel, intégral et dérivé de la commande permet de rendre plus ou moins dynamique la baisse de remplissage. Une calibration dynamique permettra de limiter le temps passé dans la troisième zone précédemment mentionnée mais les limitations de remplissage pourront être intenses et fluctuantes. Une calibration lente permettra de stabiliser les limitations de remplissage mais le temps passé dans la troisième zone sera plus important, d'où un plus grand endommagement.

Avantageusement, la diminution du remplissage d'air du moteur et/ou le fonctionnement en mode dégradé du moteur se font pour des régimes moteur de moins de 3500 tours/minute.

Avantageusement, la régulation proportionnelle, intégrale et dérivée est modifiée afin que son terme intégral ne crée pas de retard dans la mise en application de la fonction de diminution de remplissage d'air et que son terme dérivé soit filtré sur une distance calibrable pour éviter les sauts de baisse de remplissage dans le cadre d'un phénomène sporadique.

Ceci tient compte du caractère sporadique d'un phénomène de pré-allumage. Ceci fait que l'utilisation de la fonction classique intégrale d'une régulation proportionnelle, intégrale et dérivée peut ne pas donner pas de résultat pertinent. En effet, avec un compteur qui est calculé à chaque combustion, en fonction de la présence ou non de phénomène de pré-allumage, l'analyse du terme dérivé de la régulation d'une combustion à une autre n'a que très peu d'intérêt et n'apporte pas de performance à la régulation. Il est préféré de calculer le terme dérivé sur un nombre de kilomètre calibrable.

Le terme intégral et le compteur kilométrique associé au terme dérivé peuvent être enregistrés en mémoire afin que les arrêts moteur n'impacte pas la fonction de limitation de charge adaptative.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 illustre un logigramme d'un mode de réalisation du procédé de diagnostic d'un endommagement d'un moteur à allumage commandé d'un véhicule automobile par des phénomènes de pré-allumage sporadiques à faible régime du moteur selon la présente invention,
- la figure 2 illustre un logigramme d'un mode de réalisation d'un procédé de protection selon la présente invention d'un moteur à allumage commandé d'un véhicule automobile contre un endommagement par des phénomènes de pré-allumage, le procédé de protection incorporant le procédé de diagnostic montré à la figure 1 et mettant en oeuvre une diminution du remplissage d'air du moteur, avantageusement par commande intégrale, proportionnelle et dérivée,
- la figure 3 montre des courbes d'endommagement du moteur en fonction du kilométrage parcouru avec une courbe objective d'endommagement de référence et des courbes d'endommagement pour chaque cylindre du moteur, des zones différentes étant définies par rapport à la courbe objective nécessitant une protection différente conformément à un procédé de protection selon la présente invention,
- la figure 4 montre une courbe de remplissage en air du moteur en fonction du régime avec une zone d'apparition de phénomènes de pré-allumage et deux courbes de support de remplissage dont l'une est modifiée conformément à un mode de réalisation d'un procédé de protection selon l'invention,
- la figure 5 montre une autre forme de réalisation que celle montrée à la figure 4 en utilisant une cartographie en sortie d'une régulation PID fonction d'un régime moteur et du remplissage d'air.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

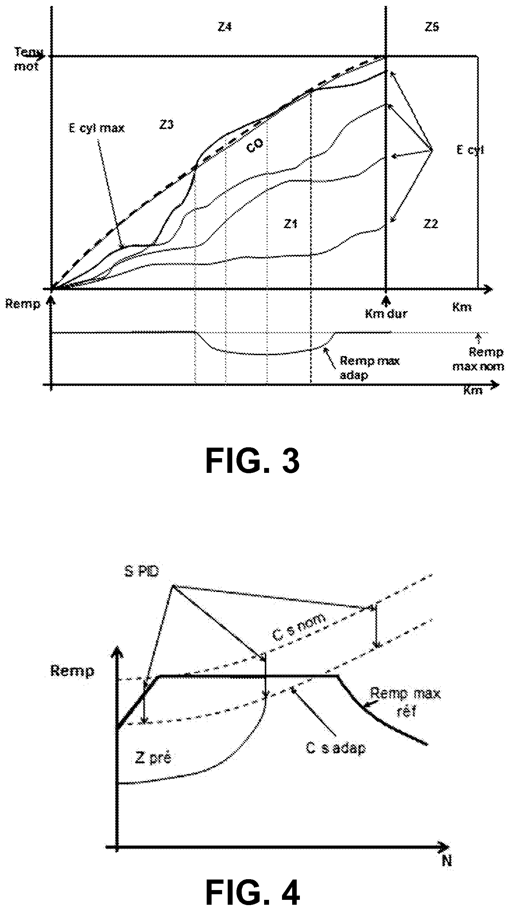

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. A la figure 3, il est montré des courbes d'endommagement pour quatre cylindres mais ce nombre de cylindre n'est pas limitatif.

Dans ce qui suit, le phénomène de pré-allumage sporadique à faible régime et non initié par l'étincelle de la bougie, engendrant une combustion prématurée et non désirée d'une partie du mélange de carburant dans le moteur dans un cylindre sera dénommé simplement phénomène de pré-allumage, ce phénomène de pré-allumage étant désigné « rumble » ou LPSI (Low Speed Pre Ignition) en langue anglo-saxonne.

Il est à noter que le phénomène de pré-allumage sporadique objet de la présente invention est différent du pré-allumage par point chaud qui est également un pré-allumage mais qui n'est pas sporadique. En effet, dans le cas d'un pré-allumage par point chaud, l'auto-allumage des gaz frais est initiée par un élément de la chambre de combustion très chaud, par exemple la bougie, une soupape ou un piston, etc.

Ce type de pré-allumage par point chaud va augmenter la température de l'élément chaud et la combustion suivante va être également initiée par l'élément chaud avec un pré-allumage encore plus tôt. Le phénomène de pré-allumage par point chaud est donc un phénomène entretenu qui ne peut être arrêté qu'en coupant l'injection ou par diminution immédiate et forte de la charge. Dans le cas contraire, le phénomène engendre la défaillance du moteur généralement par fusion du piston. Enfin, le pré-allumage par point chaud apparaît à haut régime et forte charge contrairement au phénomène de pré-allumage sporadique objet de la présente invention qui apparaît à faible régime et forte charge.

Cependant, le pré-allumage par point chaud endommage également les pièces des cylindres du moteur. Ainsi, l'endommagement issu de ce phénomène de pré-allumage par point chaud est également pris en compte dans l'endommagement du cylindre ayant subi le phénomène.

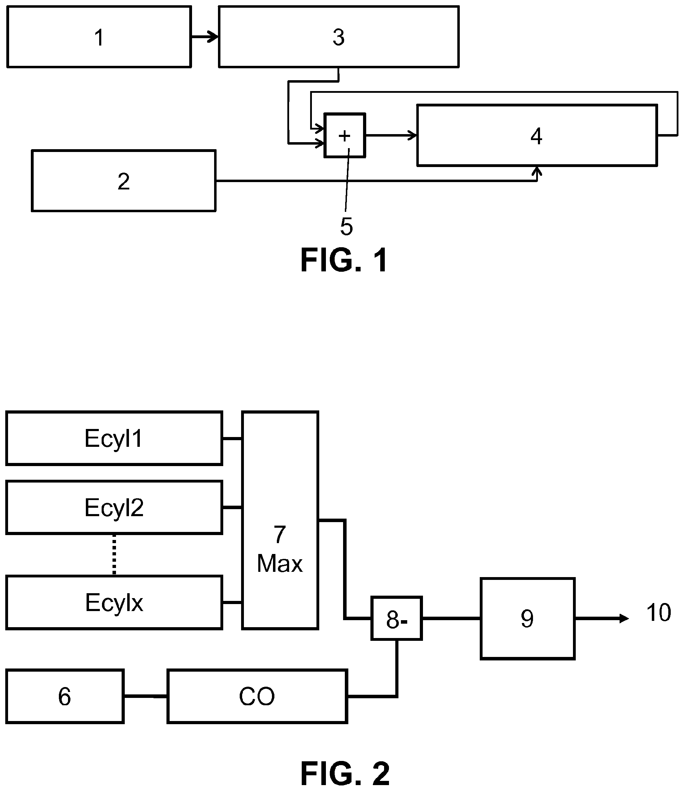

En se référant à toutes les figures et notamment à la figure 1, la présente invention concerne un procédé de diagnostic d'un endommagement d'un moteur à allumage commandé d'un véhicule automobile, cet endommagement étant dû à des phénomènes de pré-allumage sporadiques à faible régime, par exemple inférieur à 3.500 tours/minute, engendrant une combustion prématurée et non désirée d'une partie du mélange de carburant dans le moteur.

Selon la présente invention, dès qu'un phénomène de pré-allumage apparaît à un instant donné quelconque pour un cylindre du moteur à un instant donné, le phénomène de pré-allumage est détecté en 2. Il est procédé en 1 à la détermination du cylindre pour lequel le phénomène de pré-allumage a été détecté. Il est alors estimé en 3 un endommagement subi au moins une pièce moteur en contact avec la chambre de combustion du cylindre à cet instant donné en fonction d'une cartographie du régime du moteur et du remplissage d'air du cylindre avec une attribution d'une valeur d'endommagement de ces pièces moteur du cylindre à cet instant donné. Les pièces moteur en contact avec la chambre de combustion d'un cylindre au moment du pré allumage sont principalement le piston, les soupapes et la culasse. On entend par l'expression endommagement du cylindre L'endommagement d'au moins une de ces pièces moteur en en contact avec la chambre de combustion du cylindre en question.

Il est utilisé une telle cartographie car l'endommagement du moteur est dépendant de la pression maximale dans le cylindre lors du phénomène de pré-allumage mais qu'il n'existe pas de solution embarquée dans le véhicule pour mesurer la pression maximale dans le cylindre.

La valeur d'endommagement à l'instant donné est ajoutée en 5 aux valeurs d'endommagement précédemment attribuées depuis un début de mise en oeuvre du procédé pour le même cylindre afin de donner une valeur totale d'endommagement, référencée à la figure 3, Ecylmax, valeur totale propre à chaque cylindre. Il est diagnostiqué un possible endommagement du moteur par phénomènes de pré-allumage à partir de la valeur totale maximale d'endommagement de tous les cylindres. La référence 4 indique la comptabilisation et la mémorisation des valeurs totales d'endommagement pour chaque cylindre.

Hormis dans les cas où aucun phénomène de cliquetis n'est présent pendant la combustion durant laquelle apparaît un phénomène de pré-allumage, la détection logicielle d'un phénomène de pré-allumage est basée sur le même principe que la détection du cliquetis. Les oscillations formées par le cliquetis, conséquence du phénomène de pré-allumage, génèrent une vibration du bloc moteur qui est mesurée par un accéléromètre.

Cependant la fenêtre angulaire d'observation spécifique pour le phénomène de pré-allumage est calibrée plus tôt dans le cycle puisque la combustion pour un phénomène de pré-allumage est anticipée par rapport à une combustion classique cliquetante.

Lors de phénomènes de pré-allumage, les pressions dans les cylindres deviennent très importantes, sans prise en compte des oscillations de pressions cylindre, et sont de nature à endommager les pièces du moteur. La répétition du phénomène de quelques occurrences à quelques milliers d'occurrences peut entraîner la défaillance du moteur. Les oscillations de pression cylindre sont filtrées pour permettre le calcul de la pression maximale hors oscillations.

Les phénomènes de pré-allumage sont donc surveillés et détectés pour chacun des cylindres du moteur et la comptabilité des valeurs d'endommagement est faite individuellement pour chacun des cylindres du moteur.

A la figure 1, la référence 1 indique une détection d'un phénomène de pré-allumage tandis que la référence 2 indique que le cylindre du moteur, pour lequel un phénomène de pré-allumage a été détecté, a été identifié. La référence 3 symbolise le calcul d'endommagement unitaire fait par le phénomène de pré-allumage, ce calcul se faisant selon une cartographie fonction du régime moteur et du remplissage d'air du cylindre, ceci selon des règles métiers basées sur une distribution de pression maximale dans le cylindre lors d'un phénomène de pré-allumage par point de régime/remplissage issues des calculs de combustion et selon les résultats d'essais d'architecture de tenue du moteur vis-à-vis de différentes pressions maximale dans le cylindre lors d'un phénomène de pré-allumage.

La valeur d'endommagement calculée à cet instant donné de détection de phénomène de pré-allumage est ajoutée en 5 à un compteur d'endommagement référencé 4 du cylindre considéré effectuant le comptage des valeurs d'endommagement pour obtenir une valeur totale d'endommagement représentative de l'endommagement du cylindre considéré depuis un début de la mise en oeuvre du procédé.

En se référant plus particulièrement aux figures 2 et 3, il peut être prédéterminé par expérience une courbe objective CO d'endommagement du moteur en fonction du kilométrage parcouru. Il peut donc être estimé un kilométrage parcouru depuis le début de la mise en oeuvre du procédé jusqu'à l'instant présent.

La courbe objective CO d'endommagement peut être calibrable et sa forme peut être déterminée en fonction du compromis performance à faible kilométrage et fort kilométrage pour assurer la protection du moteur. La référence 6 indique le kilométrage parcouru à la figure 2.

A la figure 2, il est montré des compteurs d'endommagement pour chacun des cylindres du moteur, les compteurs étant référencés respectivement Ecyl1 à Ecylx, ceci depuis le début du kilométrage pour lequel le procédé de diagnostic est mise en oeuvre, le kilométrage total parcouru par le véhicule étant référencé 6. Il est pris en 7 le maximum MAX de la valeur totale d'endommagement parmi les valeurs totales de chaque cylindre, le cylindre présentant la valeur totale maximale d'endommagement ayant été le plus endommagé des cylindres et étant susceptible d'être défaillant.

Il peut alors être effectué une comparaison de la valeur totale d'endommagement Ecyl propre à chaque cylindre avec la courbe objective CO d'endommagement. Quand une valeur totale d'endommagement Ecylmax du cylindre le plus endommagé est supérieure à la valeur donnée par la courbe objective CO d'endommagement pour ledit kilométrage parcouru 6, il peut être conclu à un diagnostic d'endommagement sévère du moteur avec, le cas échéant, mise en oeuvre d'un procédé de protection du moteur.

Une courbe objective CO ayant été tracée en fonction du kilométrage parcouru par le véhicule comme il sera expliqué au regard de la figure 3 sert de comparaison pour évaluer l'endommagement du cylindre le plus endommagé c'est-à-dire dont la valeur Ecyl est la plus importante et est nommé Ecylmax.

La valeur de la courbe objective CO pour le kilométrage parcouru est alors retranchée en 8 à la valeur d'endommagement du cylindre le plus endommagé, Ecylmax. Si la valeur d'endommagement du cylindre le plus endommagé Ecylmax est supérieure à la valeur que prend la courbe objective CO au kilométrage parcouru à l'instant donné, il est conclu à un endommagement sévère du cylindre concerné et donc du moteur.

Un procédé de protection peut être mis en oeuvre comme il sera ultérieurement plus amplement décrit. Par exemple il peut être mis en oeuvre une correction en diminution du remplissage Remp d'air dans les cylindres, ce qui est référencé 9 à la figure 2 pour donner une diminution de remplissage Remp d'air maximale 10 adaptative.

La figure 3 montre une courbe objective CO d'endommagement du moteur en fonction du kilométrage parcouru. A la figure 3 est présente une valeur d'endommagement maximale de tenue de pièces moteur en contact avec la chambre de combustion, déterminée par expérience. Cette valeur d'endommagement maximale de tenue de pièces moteur est désigné sur la figure 3 par le terme Tenu mot et est indépendante du kilométrage parcouru. Il est montré les différentes courbes de valeurs d'endommagement, Ecyl, des cylindres du moteur.

Quand la valeur d'endommagement du cylindre le plus endommagé, Ecylmax, est supérieure à la valeur d'endommagement maximale de tenue d'au moins une des pièces en contact avec la chambre de combustion, Tenu mot, il peut être conclu à un diagnostic d'endommagement très sévère du moteur avec risque de défaillance immédiate du moteur. A la figure 3, il peut être vu que, par exemple, une seule valeur d'endommagement Ecyl propre à un cylindre dépasse la courbe objective CO, donc représentative d'un cylindre associé endommagé alors que les valeurs d'endommagement Ecyl des autres cylindres sont en dessous de la courbe objective CO et donc que leur cylindre associé ont un endommagement peu sévère. Le moteur est cependant considéré comme endommagé sévère dès qu'un de ses cylindres est considéré comme endommagé sévère.

De plus, il est déterminé par expérience un kilométrage de durabilité au-dessus duquel un risque de défaillance du moteur est élevé dû à l'usure du moteur et non exclusivement à un endommagement par les phénomènes de pré-allumage, la courbe objective CO d'endommagement ne se poursuivant pas pour un kilométrage supérieur au kilométrage de durabilité km dur et donc s'arrêtant au kilométrage de durabilité km dur. Le kilométrage de durabilité km dur est donc le kilométrage maximal au-dessus duquel le risque de défaillance du moteur par usure classique est estimé élevé.

Toujours en regard plus particulièrement de la figure 3, pour chaque cylindre, il peut être défini une première zone Z1 pour une valeur d'endommagement du cylindre le plus endommagé en dessous de la courbe objective CO d'endommagement du moteur pour un kilométrage parcouru inférieur au kilométrage de durabilité km dur.

Il peut être défini une deuxième zone Z2 pour un kilométrage parcouru supérieur au kilométrage de durabilité, km dur, et une valeur d'endommagement du cylindre le plus endommagé inférieure à la valeur d'endommagement de tenue de pièces, Tenu mot.

Il peut aussi être défini une troisième zone Z3 pour au moins une valeur d'endommagement du cylindre le plus endommagé au-dessus de la courbe objective CO d'endommagement du moteur et en dessous de la valeur d'endommagement maximale de tenue de pièces, Tenu mot, pour un kilométrage parcouru inférieur au kilométrage de durabilité, km dur.

La quatrième zone Z4 est définie pour au moins une valeur d'endommagement du cylindre le plus endommagé au-dessus de la valeur d'endommagement maximale de tenue de pièces moteur, Tenu mot, pour un kilométrage parcouru inférieur au kilométrage de durabilité, km dur. Dans cette quatrième zone Z4 il y a un risque de défaillance immédiate du moteur. Il sera essayé de ne pas faire progresser la valeur d'endommagement du cylindre le plus endommagé dans cette zone supérieure critique qui est la quatrième zone Z4.

Enfin, il est défini une cinquième zone Z5 pour au moins une valeur d'endommagement du cylindre le plus endommagé au-dessus de la valeur d'endommagement maximale de tenue de pièces moteur, Tenu mot, pour un kilométrage parcouru supérieur au kilométrage de durabilité km dur.

La première zone Z1 est une zone de fonctionnement avec un d'endommagement peu sévère. La deuxième zone Z2 est une zone de fonctionnement avec un d'endommagement peu sévère mais un risque de casse du moteur pour d'autre raison que l'endommagement moteur dû au phénomène de pré-allumage étant donné que le kilométrage parcouru par le véhicule est au-dessus du kilométrage de durabilité, km dur. La troisième zone Z3 est une zone de fonctionnement avec un endommagement sévère mais sans risque de défaillance immédiat. Cependant, la zone de fonctionnement est une zone où le risque d'atteindre la valeur d'endommagement maximale de tenue de pièces moteur avant le kilométrage durabilité est très élevé. La quatrième zone Z4 est une zone de fonctionnement avec un endommagement très sévère et un risque imminent de casse moteur. La cinquième zone Z5 est la zone de fonctionnement une zone de fonctionnement avec un endommagement très sévère et un risque imminent de casse moteur dû au phénomène de pré-allumage et à une usure classique du moteur.

L'invention concerne aussi un procédé de protection d'un moteur à allumage commandé d'un véhicule automobile contre un endommagement par des phénomènes de pré-allumage. Le procédé de protection met en oeuvre un procédé de diagnostic tel que précédemment décrit.

En se référant toujours plus particulièrement à la figure 3, au moins quand la valeur d'endommagement du cylindre le plus endommagé, Ecylmax, est supérieure à la valeur donnée par la courbe objective CO d'endommagement pour ledit kilométrage parcouru, il est procédé à une action spécifique de protection du moteur prise au moins parmi une diminution d'un remplissage d'air, Remp, du moteur ou un fonctionnement en mode dégradé du moteur. Les deux actions spécifiques peuvent être mises en oeuvre simultanément notamment dans les quatrième et cinquième zones Z4 et Z5.

La fonction de limitation de charge adaptative selon le procédé de protection conforme à la présente invention est une solution logicielle basée sur la détection de phénomènes de pré-allumage selon le procédé de diagnostic précédemment décrit.

L'action spécifique peut dépendre de la zone dans lequel la valeur totale d'endommagement d'un cylindre se trouve. Au moins une mise en oeuvre d'une diminution du remplissage d'air, Remp, du moteur dans la troisième zone Z3 peut être effectuée, cette troisième zone Z3 étant une zone de fonctionnement avec un endommagement sévère mais sans risque de défaillance immédiat et où le risque d'atteindre la valeur d'endommagement maximale de tenue de pièces moteur avant le kilométrage durabilité est très élevé.

La limitation de remplissage, Remp, est appliquée dans la troisième zone Z3 afin de diminuer les occurrences de phénomène de pré-allumage et donc la vitesse d'endommagement du moteur. En effet, la charge est un facteur d'ordre 1 sur l'apparition et l'amplitude du phénomène de pré-allumage et la diminution du remplissage maximal nominal par une fonction de limitation de charge adaptative permet de diminuer les occurrences ainsi que l'intensité des coups de phénomène de pré-allumage.

Lorsque la valeur d'endommagement du cylindre le plus endommagé entre dans la troisième zone Z3, la fonction de diminution ou limitation de remplissage Remp s'active et les occurrences et intensités des coups de phénomène de pré-allumage diminuent, ce qui diminue aussi la vitesse d'endommagement du moteur et permet de revenir dans la première zone Z1.

Aucune action de protection n'est en général mise en oeuvre dans les première et deuxième zones Z1, Z2, ces zones étant considérées comme ne présentant pas de risque de défaillance future du moteur avant le kilométrage durabilité.

Néanmoins, quand la valeur d'endommagement du cylindre le plus endommagé, Ecylmax, était dans la troisième zone Z3 et est redescendue dans la première zone Z1 lors du traitement curatif par diminution du remplissage d'air, donc de manière forcée, une diminution du remplissage Remp d'air du moteur précédemment mise en oeuvre dans la troisième zone Z3 est maintenue pendant un certain temps dans cette première zone Z1 pour le moteur.

Un fonctionnement en mode dégradé peut être mis en oeuvre dans la quatrième zone Z4, de même qu'une alerte du conducteur peut être déclenchée. Dans la cinquième zone Z5, une diminution d'un remplissage d'air, Remp, du moteur et/ou un fonctionnement en mode dégradé du moteur. Une alerte du conducteur peut être déclenchée.

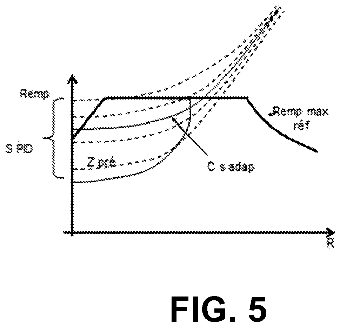

Comme symbolisé par la référence 9 à la figure 2, la diminution de remplissage d'air, Remp, du moteur peut être mise en oeuvre par une régulation proportionnelle, intégrale et dérivée ou régulation PID. En se référant à nouveau plus particulièrement à la figure 3, cette commande peut être basée en entrée sur une différence entre, d'une part, la valeur d'endommagement du cylindre le plus endommagé, Ecylmax, et, d'autre part, la valeur donnée par la courbe objective CO d'endommagement pour ledit kilométrage parcouru. Comme montré à la figure 5, cette commande peut donner en sortie S PID une baisse du remplissage Remp d'air par rapport à une courbe de référence, Remp max ref, dépendant du régime N.

A la partie inférieure de la figure 3, il est montré une courbe de remplissage d'air, Remp, en fonction du kilométrage km. Quand il a été identifié la valeur d'endommagement du cylindre le plus endommagé, Ecylmax, a dépassé localement la courbe objective pour un kilométrage parcouru, alors il est mis en oeuvre une diminution du remplissage Remp d'air du moteur en abaissant une consigne de remplissage d'air maximal nominal, Remp max nom, par une consigne diminuée de remplissage d'air maximal adaptative, Remp max adap.

Il est visible que la courbe de valeur totale d'endommagement maximal E cyl max pour un cylindre spécifique revient dans la première zone Z1 après ce traitement de diminution de remplissage Remp d'air. La diminution de remplissage est cependant continuée dans cette première zone Z1 pendant un certain temps.

On observe ainsi à la figure 3 qu'après le retour dans la première zone Z1 depuis la troisième zone Z3, il persiste une diminution de remplissage Remp pendant un certain temps. Cette diminution de remplissage Remp est dû au fonctionnement de la régulation proportionnelle, intégrale et dérivée par l'intermédiaire de son terme intégral et permet d'éviter un retour rapide en dans la troisième zone Z3 en cas d'occurrences de phénomène de pré-allumage à nouveau élevées.

En se référant plus particulièrement aux figures 4 et 5, la diminution du remplissage d'air, Remp, du moteur et/ou le fonctionnement en mode dégradé du moteur peuvent se faire pour des régimes N moteur faibles fonction du type de moteur utilisé, ces régimes N moteurs étant généralement inférieurs à 3500 tours/minute.

Une régulation proportionnelle, intégrale et dérivée peut ne donner que partiellement satisfaction. Par exemple, le terme intégral de la régulation ne peut prendre des valeurs supérieures à 0 pour éviter un retard à la mise en place de la baisse de remplissage trop important après un temps long passé la première zone Z1 puis une entrée dans la troisième zone Z3.

De plus, les phénomènes de pré-allumage étant sporadiques, l'utilisation de la fonction classique intégrale d'une telle régulation peut ne pas donner entière satisfaction, notamment en ce qui concerne le terme dérivé. Le terme dérivé d'une combustion à une autre n'a que très peu d'intérêt et n'apporte pas de performance à la régulation. Il peut convenir de calculer le terme dérivé sur un nombre de kilomètres calibrable, et de le filtrer pour éviter les sauts de baisse de remplissage dans le cadre d'un phénomène sporadique.

Comme précédemment mentionné, l'application de la limitation de charge, notamment par diminution du remplissage d'air, Remp, n'est pas pertinente sur l'ensemble des régimes N. En effet, le phénomène de pré-allumage étant un phénomène apparaissant pour les faibles régimes N généralement inférieurs à 3500 tours/minute, la limitation de charge à haut régime n'a que peu intérêt. Ainsi, la limitation de charge peut être réalisée uniquement à bas régime N.

Pour une limitation de la correction obtenue par le procédé de protection selon l'invention, dans un mode de réalisation optionnelle, il est possible de décaler une courbe support qui est tangente au remplissage Remp maximale selon la sortie de la régulation entraînant une diminution de remplissage Remp adaptatif. Ceci est montré à la figure 4.

La figure 4 montre à sa partie supérieure un remplissage d'air, Remp, du moteur en fonction du régime moteur N. Il est dessiné une courbe de support nominal, C s nom, qui après régulation proportionnelle, intégrale et dérivée en sortie S PID confère à la courbe de support nominal, C s nom, un décalage pour donner une courbe de support adaptative, C s adap.

A cette figure, une zone d'apparitions de phénomènes de pré-allumage est entourée et référencée Z pré, cette zone étant présente pour des régimes N moteurs faibles, par exemple généralement inférieurs à 3500 tours par minute. La courbe Remp max réf est la courbe de remplissage Remp maximale de référence. Le décalage entre la courbe de support nominal, C s nom, et la courbe de support adaptative, C s adap, reste sensiblement constant pour tous les régimes N, ce qui n'est pas forcément nécessaire.

Pour une limitation de la correction obtenue par le procédé de protection selon l'invention, dans un autre mode de réalisation optionnelle, il est possible d'effectuer une interpolation selon une cartographie fonction, d'une part, de la sortie de la régulation proportionnelle, intégrale et dérivée régulant une diminution de remplissage d'air, Remp, et, d'autre par du régime moteur N.

La figure 5 illustre un tel mode de réalisation optionnelle en montrant des courbes de remplissage Remp selon un régime moteur N faisant partie de la cartographie en sortie, S PID, de la régulation proportionnelle, intégrale et dérivée. A cette figure 5, une zone d'apparitions de phénomènes de pré-allumage est entourée et référencée Z pré, cette zone étant présente pour des régimes N moteurs faibles, par exemple généralement inférieurs à 3500 tours par minute. Il est montré une courbe adaptative, Cs adap, donnée par la cartographie. La courbe Remp max réf est la courbe de remplissage Remp maximale de référence.

L'invention n'est nullement limitée aux modes de réalisation décrits et illustrés qui n'ont été donnés qu'à titre d'exemples. L'objet de la protection demandée est défini par les revendications attachées.

## Revendications

1. Procédé de diagnostic d'un endommagement d'un moteur à allumage commandé d'un véhicule automobile, cet endommagement étant dû à des phénomènes de pré-allumage sporadiques à faible régime engendrant une combustion prématurée et non désirée d'une partie du mélange de carburant dans le moteur, procédé selon lequel il est détecté (1) un phénomène de pré-allumage pour un cylindre des cylindres du moteur à un instant donné, il est estimé (3) un endommagement du cylindre correspondant à un endommagement subi par au moins une pièce moteur en contact avec la chambre de combustion de ce cylindre à cet instant donné en fonction d'une cartographie du régime du moteur et du remplissage (Remp) d'air du cylindre avec une attribution d'une valeur d'endommagement du cylindre à cet instant donné, la valeur d'endommagement à l'instant donné étant ajoutée (5) aux valeurs d'endommagement précédemment attribuées depuis un début de mise en oeuvre du procédé pour le même cylindre afin de donner (4) une valeur totale d'endommagement (Ecyl, Ecyl max) propre à chaque cylindre, le procédé étant **caractérisé en ce que** la valeur totale d'endommagement du cylindre le plus endommagé est comparée à une valeur prédéterminée et il est diagnostiqué un possible endommagement du moteur par phénomènes de pré-allumage si la valeur totale d'endommagement du cylindre le plus endommagé dépasse la valeur prédéterminée.

2. Procédé selon la revendication précédente, dans lequel il est estimé un kilométrage parcouru depuis le début de la mise en oeuvre du procédé jusqu'à l'instant donné, il est effectué une comparaison de la valeur d'endommagement du cylindre le plus endommagé (Ecylmax) avec une courbe objective (CO) d'endommagement prédéterminée par expérience du moteur en fonction du kilométrage parcouru et, quand la valeur d'endommagement du cylindre le plus endommagé (Ecylmax) est supérieure à la valeur donnée par la courbe objective (CO) d'endommagement pour ledit kilométrage parcouru, il est conclu à un diagnostic d'endommagement sévère du moteur.

3. Procédé selon la revendication précédente, quand la valeur d'endommagement du cylindre le plus endommagé (Ecylmax) est supérieure à une valeur d'endommagement maximale prédéterminée de tenue d'au moins une de ces pièces moteur (Tenu mot), il est conclu à un diagnostic d'endommagement très sévère du moteur avec risque de défaillance immédiate du moteur.

4. Procédé selon la revendication précédente, dans lequel il est déterminé par expérience un kilométrage de durabilité (km dur) au-dessus duquel un risque de défaillance du moteur est élevé dû à l'usure du moteur et non exclusivement à un endommagement par les phénomènes de pré-allumage, la courbe objective (CO) d'endommagement ne se poursuivant pas pour un kilométrage supérieur au kilométrage de durabilité (km dur).

5. Procédé selon la revendication précédente, dans lequel, il est défini une première zone (Z1) pour une valeur d'endommagement du cylindre le plus endommagé en dessous de la courbe objective (CO) d'endommagement du moteur pour un kilométrage parcouru inférieur au kilométrage de durabilité (km dur), une deuxième zone (Z2) pour un kilométrage parcouru supérieur au kilométrage de durabilité (km dur) et une valeur d'endommagement du cylindre le plus endommagé inférieure à la valeur d'endommagement maximale de tenue de pièces moteur (Tenu mot), une troisième zone (Z3) pour une valeur d'endommagement du cylindre le plus endommagé au-dessus de la courbe objective (CO) d'endommagement du moteur et en dessous de la valeur d'endommagement maximale de tenue de pièces moteur (Tenu mot) pour un kilométrage parcouru inférieur au kilométrage de durabilité (km dur), une quatrième zone (Z4) pour une valeur d'endommagement du cylindre le plus endommagé au-dessus de la valeur d'endommagement maximale de tenue de pièces moteur (Tenu mot) pour un kilométrage parcouru inférieur au kilométrage de durabilité (km dur) et une cinquième zone (Z5) pour une valeur d'endommagement du cylindre le plus endommagé au-dessus de la valeur d'endommagement maximale de tenue de pièces moteur (Tenu mot) pour un kilométrage parcouru supérieur au kilométrage de durabilité (km dur).

6. Procédé de protection d'un moteur à allumage commandé d'un véhicule automobile contre un endommagement par des phénomènes de pré-allumage, **caractérisé en ce qu'**il met en oeuvre un procédé de diagnostic selon l'une quelconque des revendications 2 à 5 et **en ce que**, quand la valeur d'endommagement du cylindre le plus endommagé (Ecylmax) est supérieure à la valeur donnée par la courbe objective (CO) d'endommagement pour ledit kilométrage parcouru, il est procédé à une action spécifique de protection du moteur prise au moins parmi une diminution d'un remplissage (Remp) d'air du moteur ou un fonctionnement en mode dégradé du moteur.

7. Procédé de protection selon la revendication 6 et la revendication 5, dans lequel au moins une mise en oeuvre d'une diminution du remplissage (Remp) d'air du moteur dans la troisième zone (Z3) est effectuée, aucune action de protection n'étant mise en oeuvre dans les première et deuxième zones (Z1, Z2) quand la valeur totale maximale (Ecylmax) d'endommagement d'un cylindre parmi les cylindres du moteur n'était pas précédemment dans la troisième zone (Z3) et, dans le cas contraire, une diminution du remplissage (Remp) d'air du moteur précédemment mise en oeuvre dans la troisième zone (Z3) est maintenue pendant un temps limité, un fonctionnement en mode dégradé étant mis en oeuvre dans la quatrième zone (Z4) avec ou sans diminution du remplissage (Remp) d'air, une diminution d'un remplissage (Remp) d'air du moteur, un fonctionnement en mode dégradé du moteur par calibration dans la cinquième zone (Z5).

8. Procédé de protection selon l'une quelconque des revendications 6 à 7, dans lequel la diminution de remplissage (Remp) d'air du moteur est mise en oeuvre par une régulation proportionnelle, intégrale et dérivée avec en entrée une différence entre, d'une part, la valeur d'endommagement du cylindre le plus endommagé (Ecylmax) et, d'autre part, la valeur donnée par la courbe objective (CO) d'endommagement pour ledit kilométrage parcouru et en sortie (S PID) une diminution du remplissage (Remp) d'air par rapport à une courbe de référence dépendant du régime (R).

9. Procédé selon l'une quelconque des revendications 6 à 8, dans lequel la diminution du remplissage (Remp) d'air du moteur et/ou le fonctionnement en mode dégradé du moteur se font pour des régimes (R) moteur de moins de 3500 tours/minute.

10. Procédé selon les revendications 7 et 9, dans lequel la régulation proportionnelle, intégrale et dérivée est modifiée afin que son terme intégral ne crée pas de retard dans la mise en application de la fonction de diminution de remplissage d'air (Remp) et que son terme dérivé soit filtré sur une distance calibrable.

## Patentansprüche

1. Verfahren zur Diagnose von Schäden an einem Ottomotor eines Kraftfahrzeugs, wobei diese Schäden auf sporadischen Frühzündungserscheinungen bei niedrigen Drehzahlen beruhen, die eine vorzeitige und unerwünschte Verbrennung eines Teils des Kraftstoffgemisches im Motor bewirken erfasst wird (1) ein Frühzündungsphänomen für einen Zylinder der Zylinder des Motors zu einem gegebenen Zeitpunkt, wird geschätzt (3) eine Beschädigung des Zylinders, die einer Beschädigung entspricht, die von mindestens einem in Kontakt stehenden Motorteil erlitten wird des Brennraums dieses Zylinders zu diesem gegebenen Zeitpunkt als Funktion eines Kennfelds der Motordrehzahl und der Füllung (Remp) von Luft in dem Zylinder mit einer Zuordnung eines Schadenswerts zu dem Zylinder zu diesem gegebenen Zeitpunkt, der Wert des Schadens zum gegebenen Zeitpunkt, der (5) zu den Schadenswerten addiert wird, die zuvor seit dem Beginn der Implementierung des Verfahrens für denselben Zylinder zugeordnet wurden, um (4) einen spezifischen Gesamtschadenswert (Ecyl, Ecyl max) zu erhalten zu jedem Zylinder, wobei das Verfahren **dadurch gekennzeichnet ist, dass** der Gesamtschadenswert des am stärksten beschädigten Zylinders mit einem vorbestimmten Wert verglichen wird und ein möglicher Schaden des Motors durch Frühzündungsphänomene diagnostiziert wird, wenn der Gesamtwert vorliegt e der Beschädigung des am meisten beschädigten Zylinders übersteigt den vorbestimmten Wert.

2. Verfahren nach dem vorhergehenden Anspruch, bei dem eine seit Beginn der Durchführung zurückgelegte Wegstrecke geschätzt wird des Verfahrens bis zum gegebenen Zeitpunkt wird der Schadenswert des am stärksten beschädigten Zylinders (Ecylmax) mit einer objektiven Schadenskurve (CO) des durch Erfahrung des Motors als Funktion der Laufleistung vorgegebenen Schadensverlaufs verglichen gefahren und wenn der Schadenswert des am stärksten beschädigten Zylinders (Ecylmax) größer ist als der Wert, der durch die objektive Schadenskurve (CO) für die gefahrene Kilometerleistung gegeben ist, wird eine Diagnose eines schweren Motorschadens gefolgert.

3. Verfahren nach dem vorhergehenden Anspruch, wenn der Schadenswert des am stärksten geschädigten Zylinders (Ecylmax) größer als ein vorgegebener maximaler Schadenswert zum Halten mindestens eines dieser Motorteile (Hold-Wort) ist, wird auf eine Diagnose von sehr schwer geschlossen Motorschaden mit Gefahr des sofortigen Motorausfalls.

4. Verfahren nach dem vorhergehenden Anspruch, bei dem erfahrungsgemäß eine Haltbarkeitslaufleistung (harte km) bestimmt wird, oberhalb derer ein Risiko eines Motorausfalls aufgrund von Motorverschleiß und nicht ausschließlich aufgrund von Schäden durch die Phänomene der Vorzündung hoch ist, die objektive Kurve ( CO) des Schadens, der nicht über eine Laufleistung anhält, die größer ist als die Laufleistung der Haltbarkeit (harte km).

5. Verfahren nach dem vorhergehenden Anspruch, bei dem eine erste Zone (Z1) für einen Schadenswert des am stärksten beschädigten Zylinders unterhalb der objektiven Kurve (CO) des Motorschadens für eine Laufleistung definiert wird, die kleiner ist als die Laufleistung der Haltbarkeit (harte km). , eine zweite Zone (Z2) für eine zurückgelegte Laufleistung größer als die Laufleistung der Haltbarkeit (harte km) und einen Schadenswert des am stärksten beschädigten Zylinders kleiner als der maximale Schadenswert des Motorteilwiderstands (Motor Held), eine dritte Zone (Z3 ) für einen Schadenswert des am meisten beschädigten Zylinders über der Motorschadenszielkurve (CO) und unter dem maximalen Motorhalteschadenswert Motorteile (Held mot) für eine Laufleistung, die weniger als die Haltbarkeitslaufleistung (harte km) zurückgelegt wurde, ein Viertel Zone (Z4) für einen Schadenswert des am meisten geschädigten Zylinders über dem maximalen Schadenswert von te frei von Motorteilen (Held mot) für eine Laufleistung von weniger als der Laufleistung der Haltbarkeit (harte km) und eine fünfte Zone (Z5) für einen Schadenswert des am stärksten beschädigten Zylinders über dem maximalen Schadenswert von Hold von Motorteilen (Held mot) für eine gefahrene Laufleistung größer als die Laufleistung der Haltbarkeit (harte km).

6. Verfahren zum Schutz eines Ottomotors eines Kraftfahrzeugs vor Schäden durch Frühzündungsphänomene, **dadurch gekennzeichnet, dass** es ein Diagnoseverfahren nach einem der Ansprüche 2 bis 5 anwendet und dass der Schadenswert des am meisten beschädigten Zylinders (Ecylmax) größer ist als der Wert, der durch die objektive Schadenskurve (CO) für die besagte gefahrene Kilometerleistung gegeben ist, wird eine bestimmte Motorschutzmaßnahme zumindest von einer Verringerung der Luftfüllung (Remp) des Motors oder einem Betrieb im verschlechterten Zustand ergriffen Modus des Motors.

7. Schutzverfahren nach Anspruch 6 und Anspruch 5, bei dem mindestens eine Durchführung einer Verringerung der Luftfüllung (Remp) des Motors in der dritten Zone (Z3) durchgeführt wird, wobei in der ersten und keine Schutzwirkung durchgeführt wird zweite Zonen (Z1, Z2), wenn der maximale Gesamtwert (Ecylmax) des Schadens an einem Zylinder unter den Zylindern des Motors vorher nicht in der dritten Zone (Z3) lag und andernfalls eine Verringerung der Füllung (Remp) von zuvor in der dritten Zone (Z3) umgesetzte Motorluft für eine begrenzte Zeit aufrechterhalten wird, in der vierten Zone (Z4) ein Betrieb im degradierten Betrieb mit oder ohne Verringerung der Füllung (Remp) von Luft durchgeführt wird, eine Verringerung der Füllung ( Remp) der Luft des Motors, Betrieb im degradierten Modus des Motors durch Kalibrierung in der fünften Zone (Z5).

8. Schutzverfahren nach einem der Ansprüche 6 bis 7, bei dem die Reduzierung der Luftfüllung (Remp) im Motor durch eine proportionale, integrale und differenzierende Regelung mit einer Differenz zwischen einerseits, einerseits, der Schadenswert des am stärksten beschädigten Zylinders (Ecylmax) und andererseits der durch die objektive Schadenskurve (CO) gegebene Schadenswert für die besagte gefahrene Laufleistung und am Ausgang (SPID) eine Minderung der Füllung (Remp) von Luft gegen eine drehzahlabhängige Referenzkurve (R).

9. Verfahren nach einem der Ansprüche 6 bis 8, bei dem die Verringerung der Luftfüllung (Remp) des Motors und/oder der Betrieb im Notbetrieb des Motors für Motordrehzahlen (R) von weniger als 3500 Umdrehungen erfolgen /Minute.

10. Verfahren nach den Ansprüchen 7 und 9, bei dem die Proportional-, Integral und Differentialregelung so modifiziert wird, dass ihr integraler Anteil keine Verzögerung bei der Anwendung der Reduktionsfunktion der Luftfüllung (Remp) erzeugt und dass ihr abgeleiteter Anteil übergefiltert wird eine kalibrierbare Distanz.

## Claims

1. Method for diagnosing damage to a spark-ignition engine of a motor vehicle, this damage being due to sporadic pre-ignition phenomena at low revs causing premature and undesired combustion of part of the fuel mixture in the engine, the process by which it is detected (1) a phenomenon of pre-ignition for a cylinder of the cylinders of the engine at a given moment, it is estimated (3) a damage of the cylinder corresponding to a damage undergone by at least one engine part in contact with the chamber of combustion of this cylinder at this given instant as a function of a map of the engine speed and of the filling (Remp) of air in the cylinder with an allocation of a value of damage to the cylinder at this given instant, the value of damage at the given instant being added (5) to the damage values previously assigned since the start of implementation of the method for the same cylinder in order to give (4) a total damage value (Ecyl, Ecyl max) specific to each cylinder, the method being **characterized in that** the total value of damage of the most damaged cylinder is compared with a predetermined value and a possible damage of the engine by pre-ignition phenomena is diagnosed if the total value e of damage of the most damaged cylinder exceeds the predetermined value.

2. Method according to the preceding claim, in which a distance traveled since the start of the implementation is estimated of the method up to the given instant, a comparison is made of the damage value of the most damaged cylinder (Ecylmax) with an objective curve (CO) of damage predetermined by experience of the engine as a function of the mileage traveled and, when the damage value of the most damaged cylinder (Ecylmax) is greater than the value given by the objective damage curve (CO) for said mileage traveled, a diagnosis of severe damage to the engine is concluded .

3. Method according to the preceding claim, when the damage value of the most damaged cylinder (Ecylmax) is greater than a predetermined maximum damage value for holding at least one of these engine parts (Held word), it is concluded that a diagnosis of very severe engine damage with the risk of immediate engine failure.

4. Method according to the preceding claim, in which a durability mileage (hard km) is determined by experience above which a risk of engine failure is high due to engine wear and not exclusively to damage by the phenomena of pre-ignition, the objective curve (CO) of damage not continuing for a mileage greater than the mileage of durability (hard km).

5. Method according to the preceding claim, in which a first zone (Z1) is defined for a damage value of the most damaged cylinder below the objective curve (CO) of engine damage for a mileage traveled less than the mileage of durability (hard km), a second zone (Z2) for a mileage covered greater than the mileage of durability (hard km) and a damage value of the most damaged cylinder lower than the maximum damage value of engine parts resistance (Motor Held), a third zone (Z3) for a damage value of the most damaged cylinder above the engine damage objective curve (CO) and below the maximum engine hold damage value. engine parts (Held mot) for a mileage traveled less than the durability mileage (hard km), a fourth zone (Z4) for a damage value of the most damaged cylinder above the maximum damage value of te bare of engine parts (Held mot) for a mileage traveled less than the mileage of durability (hard km) and a fifth zone (Z5) for a damage value of the most damaged cylinder above the maximum damage value of hold of engine parts (Held mot) for a mileage traveled greater than the mileage of durability (hard km).

6. Method for protecting a spark-ignition engine of a motor vehicle against damage by pre-ignition phenomena, **characterized in that** it implements a diagnostic method according to any one of Claims 2 to 5 and **in that**, when the damage value of the most damaged cylinder (Ecylmax) is greater than the value given by the objective damage curve (CO) for the said mileage travelled, a specific engine protection action is taken taken at least from a reduction in filling (Remp) of air of the engine or operation in degraded mode of the engine.
Protection method according to Claim 6 and Claim 5, in which at least one implementation of a reduction in the filling (Remp) of air of the engine in the third zone (Z3) is carried out, no protective action being implemented in the first and second zones (Z1, Z2) when the maximum total value.

7. Protection method according to Claim 6 and Claim 5, in which at least one implementation of a reduction in the filling (Remp) of air of the engine in the third zone (Z3) is carried out, no protective action being implemented in the first and second zones (Z1, Z2) when the maximum total value (Ecylmax) of damage to a cylinder among the cylinders of the engine was not previously in the third zone (Z3) and, in otherwise, a reduction in the filling (Remp) of engine air previously implemented in the third zone (Z3) is maintained for a limited time, operation in degraded mode being implemented in the fourth zone (Z4) with or without reduction in the filling (Remp) of air, a reduction in the filling (Remp) of air of the engine, operation in degraded mode of the engine by calibration in the fifth zone (Z5).

8. Protection method according to any one of Claims 6 to 7, in which the reduction in filling (Remp) of air in the engine is implemented by a proportional, integral and derivative regulation with as input a difference between, of a on the one hand, the damage value of the most damaged cylinder (Ecylmax) and, on the other hand, the value given by the objective curve (CO) of damage for the said mileage traveled and at the exit (SPID) a reduction in filling ( Remp) of air against an RPM-dependent reference curve (R).

9. Method according to any one of Claims 6 to 8, in which the reduction in the filling (Remp) of air of the engine and/or the operation in degraded mode of the engine take place for engine speeds (R) of less than 3500 revolutions /minute.

10. Method according to claims 7 and 9, in which the proportional, integral and derivative regulation is modified so that its integral term does not create a delay in the application of the reduction function of air filling (Remp) and that its derived term is filtered over a calibratable distance.
